# EUROPEAN PATENT SPECIFICATION

(11) **EP 4 588 690 B1**
(45) Date of publication and mention of the grant of the patent: **07.10.2026**
(21) Application number: 23882230.8
(22) Date of filing: 29.08.2023
(51) Int. Cl.: B60C 7/00, B60C 7/18, B60C 7/10, B60C 7/14

(54) **NON-PNEUMATIC TIRE**
LUFTLOSER REIFEN
BANDAGE NON PNEUMATIQUE

(30) Priority: 24.10.2022 JP 2022170074
(43) Date of publication of application: 23.07.2025
(73) Proprietor: BRIDGESTONE CORPORATION, Chuo-ku Tokyo 104-8340 (JP)
(72) Inventor: ABE Akihiko, Tokyo 104-8340 (JP)
(74) Representative: Marks & Clerk LLP
(86) International application number: PCT/JP2023/031316
(87) International publication number: WO 2024/090016

(56) References cited:
- CN-A- 106 739 828
- CN-A- 107 839 403
- JP-A- 2012 062 045
- JP-A- 2019 518 639
- JP-A- 2021 024 551
- JP-A- 2022 516 459
- JP-A- H03 248 901
- KR-A- 20210 145 584
- US-A1- 2014 062 172
- US-A1- 2016 016 433
- US-B1- 10 953 695

## Description

### TECHNICAL FIELD

The present invention relates to a non-pneumatic tire.

This application claims priority based on Japanese Patent Application No. 2022-170074, filed in Japan on October 24, 2022.

### BACKGROUND

There have been non-pneumatic tires for some time (see, for example, Patent Document 1). Attention is also drawn to the disclosures of US10953695B1, US2014/062172A1 and CN107839403A.

### CITATION LIST

### Patent Literature

PTL 1: JP 2020-083243 A

### SUMMARY

### (Technical Problem)

However, there was room for improvement in ride comfort performance with conventional non-pneumatic tires.

The object of the present invention is to provide a non-pneumatic tire that can improve the ride comfort performance.

### (Solution to Problem)

A non-pneumatic tire is provided as claimed in claim 1.

### (Advantageous Effect)

According to the present invention, it is possible to provide a non-pneumatic tire that can improve the ride comfort performance.

### BRIEF DESCRIPTION OF THE DRAWINGS

In the accompanying drawings:
FIG. 1 is a side view of a non-pneumatic tire in accordance with one embodiment of the present invention, viewed from one side in the tire width direction;
FIG. 2 is an enlarged view illustrating a part of the non-pneumatic tire in Figure 1;
FIG. 3 is an illustration to explain the behavior of the non-pneumatic tire in Figure 2 when a load is applied to the tire; and
FIG. 4 is an enlarged view illustrating a part of a non-pneumatic tire in accordance with Comparative Example 1.

### DETAILED DESCRIPTION

The non-pneumatic tire in accordance with this disclosure can be used on any moving object (e.g., small mobilities, light vehicles, passenger vehicles, various other vehicles, motorcycles, wheelchairs, etc.), and is particularly suitable for use on the small mobilities or the light vehicles.

Embodiments of a non-pneumatic tire in accordance with the present invention will now be described with reference to the drawings.

The same components and parts are designated by the same reference numerals/symbols in each drawing.

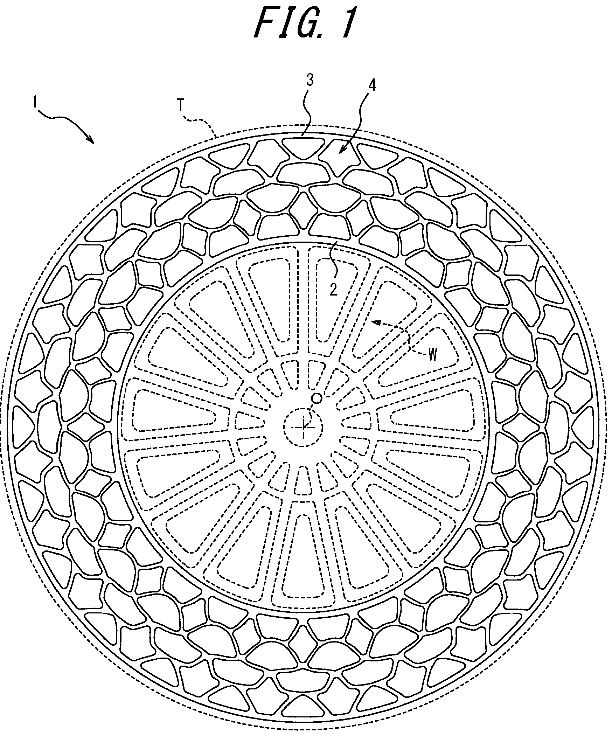

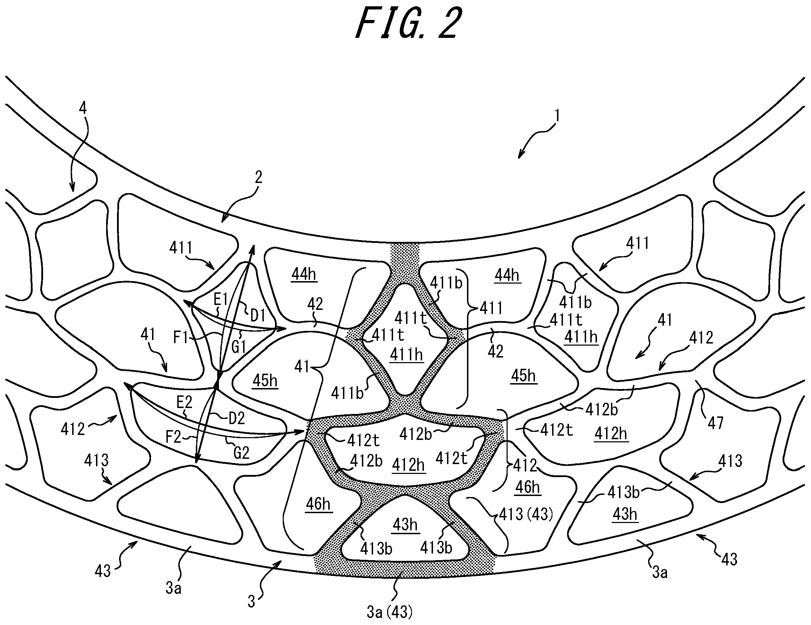

Figure 1 is a side view of a non-pneumatic tire 1 in accordance with one embodiment of the present invention, viewed from one side in the tire width direction. Figure 2 is an enlarged view illustrating a part of the non-pneumatic tire 1 in Figure 1.

As illustrated in Figure 1, the non-pneumatic tire 1 is configured to be provided on the outer circumferential side of a wheel W, which is connected to an axle (not illustrated in the figure). The non-pneumatic tire 1 may be configured as a single unit with the wheel W, or it may be configured separately from the wheel W. The non-pneumatic tire 1 and the wheel W are arranged on the same axis as the central axis O of the axle (not illustrated in the figure). In other words, the central axis O of the axle (not illustrated in the figure) coincides with the tire central axis O of the non-pneumatic tire 1.

In this document, the direction parallel to the tire central axis O is referred to as the "tire width direction", the direction perpendicular to the tire central axis O is referred to as the "axially perpendicular direction", the radial direction and the circumferential direction centered on the tire central axis O are referred to as the "tire radial direction" and the "tire circumferential direction", respectively. The side of the tire that is closer to the tire central axis O is referred to as the "tire radially inner side" or "tire inner circumferential side", and the side that is further from the tire central axis O is referred to as the "tire radially outer side" or "tire outer circumferential side".

In this document, when explaining the configuration (shape, dimensions, etc.) of the non-pneumatic tire 1, unless otherwise specified, it shall be assumed that the non-pneumatic tire 1 is not in contact with the ground and that no load is applied to the non-pneumatic tire 1.

As illustrated in Figures 1 and 2, the non-pneumatic tire 1 comprises an inner cylinder 2, an outer cylinder 3, and a connecting body 4. It is preferable, as illustrated in Figure 1, that the non-pneumatic tire 1 further comprises a tread member T made of rubber or the like on the tire outer circumferential side of the outer cylinder 3. In Figure 2, the tread member T is omitted.

In addition, in Figure 2, to make it easier to understand the configuration described in this document, a part of the non-pneumatic tire 1 is shaded with dot hatching.

The connecting body 4 and the outer cylinder 3 are configured to be elastically deformable. The inner cylinder 2 may also be configured to allow elastic deformation.

The inner cylinder 2, the connecting body 4, and the outer cylinder 3 may be made from the same material as a single piece (i.e. as a single part) by injection molding or other means.

The material constituting each of the connecting body 4 and the outer cylinder 3 is preferably an elastic body, and is preferably a resin such as a thermoplastic elastomer.

The inner cylinder 2 is preferably made of the same material as the material that constitutes the connecting body 4 and the outer cylinder 3.

It is preferable that the cross-sectional shape in the axially perpendicular direction of the connecting body 4 is substantially the same throughout the entire length in the tire width direction of the connecting body 4.

It is preferable that the inner cylinder 2, the connecting body 4, and the outer cylinder 3 each have substantially the same length in the tire width direction. It is preferable that the length of the inner cylinder 2, the connecting body 4, and the outer cylinder 3 in the tire width direction is substantially the same as the length of the non-pneumatic tire 1 in the tire width direction.

The inner cylinder 2 is either integrally connected to the wheel W, or is configured separately from the wheel W and to be attached to the wheel W.

The outer cylinder 3 is disposed on the tire outer circumferential side of the inner cylinder 2.

The connecting body 4 is located between the inner cylinder 2 and the outer cylinder 3, and connects the inner cylinder 2 and the outer cylinder 3.

As illustrated in Figure 2, the connecting body 4 has a plurality of unit-connecting-body portions 41 arranged along the tire circumferential direction, and a plurality of bridges 42 that connect the plurality of unit-connecting-body portions 41 to each other.

As illustrated in Figure 2, each unit-connecting-body portion 41 has an inner annular part 411, a middle annular part 412, and an outer connecting body part 413.

The inner annular part 411 has a pair of inner branches 411b that face each other in the tire circumferential direction. This pair of inner branches 411b are connected to each other on the inner cylinder 2 and gradually move away from each other in the tire circumferential direction as moving outward in the tire radial direction, then gradually approach each other and are connected to each other. In this way, the inner annular part 411 is configured in a circular shape. The inner annular part 411 defines an inner hole 411h on its inner circumference. The inner hole 411h penetrates the connecting body 4 in the tire width direction. The inner branches 411b that make up each side are not in straight lines, but are formed by combining small sides that are curved gently, as in the example illustrated in the figure.

The middle annular part 412 has a pair of middle branches 412b that face each other in the tire circumferential direction. This pair of middle branches 412b are connected to each other at the end portion on the tire outer circumferential side of the inner annular part 411 and gradually move away from each other in the tire circumferential direction as moving outward in the tire radial direction, then gradually approach each other and are connected to each other. In this way, the middle annular part 412 is configured in a circular shape. The middle annular part 412 defines a middle hole 412h on its inner circumference. The middle hole 412h penetrates the connecting body 4 in the tire width direction. The middle branches 412b that make up each side are not in straight lines, but are formed by combining small sides that are curved gently, as in the example illustrated in the figure.

The outer connecting body part 413 has a pair of outer branches 413b that face each other in the tire circumferential direction. This pair of outer branches 413b are connected to each other at the end portion on the tire outer circumferential side of the middle annular part 412 and gradually move away from each other in the tire circumferential direction as moving outward in the tire radial direction, and then are connected to the outer cylinder 3. The end portions on the tire outer circumferential side of the pair of outer branches 413b of the outer connecting body part 413 are spaced apart from each other in the tire circumferential direction. The outer branches 413b that make up each side are not in straight lines, but are curved gently in the example illustrated in the figure.

An outer annular part 43 is composed of the outer connecting body part 413, and an outer cylinder connecting part 3a that is a part of the outer cylinder, connecting the end portions on the tire outer circumference side of the pair of outer branches 413b of the outer connecting body part 413. The outer annular part 43 is configured in a circular shape. The outer annular part 43 defines an outer hole 43h on its inner circumference. The outer hole 43h penetrates the connecting body 4 in the tire width direction. The outer annular part 43 is substantially triangular in shape with its base on the tire outer circumferential side.

The inner annular parts 411 that are adjacent to each other in the tire circumferential direction are spaced apart from each other in the tire circumferential direction. The inner annular part 411 has a pair of tire circumferential end portions 411t on both sides in the tire circumferential direction. The pair of tire circumferential end portions 411t of the inner annular part 411 each correspond to the portion, of the pair of inner branches 411b of the inner annular part 411, that change its extending direction toward each other after separating from each other in the tire circumferential direction as they move outward in the tire radial direction, in other words, of the pair of inner branches 411b of the inner annular part 411, the apex portions of the pair of inner branches 411b of the inner annular part 411 that project toward one side and the other side in the tire circumferential direction, respectively. The pair of tire circumferential end portions 411t of the inner annular part 411 may be smoothly curved, as in the example illustrated in Figure 2, or angular by folding.

Each bridge 42 connects the tire circumferential end portions 411t of the inner annular parts 411 adjacent to each other in the tire circumferential direction.

In the example illustrated in Figure 2, each bridge 42 extends along the tire circumferential direction (i.e., substantially parallel to the tire circumferential direction) and also extends in a curved line that is curved convexly toward the tire inner circumferential side.

However, the shape of each bridge 42 may be arbitrary.

The middle annular part 412 has a pair of tire circumferential end portions 412t on both sides in the tire circumferential direction. The pair of tire circumferential end portions 412t of the middle annular part 412 each correspond to the portion, of the pair of middle branches 412b of the middle annular part 412, that change the extending direction toward each other after separating from each other in the tire circumferential direction as they move outward in the tire radial direction, in other words, of the pair of middle branches 412b of the middle annular part 412, the apex portions of the pair of middle branches 412b of the middle annular part 412 that project toward one side and the other side in the tire circumferential direction, respectively. The pair of tire circumferential end portions 412t of the middle annular part 412 may be smoothly curved, as in the example illustrated in Figure 2, or angular by folding.

The tire circumferential end portions 412t of the middle annular parts 412 adjacent to each other in the tire circumferential direction are connected to each other.

As in the example illustrated in Figure 2, it is preferable if the outer connecting body parts 413 adjacent to each other in the tire circumferential direction are spaced apart from each other in the tire circumferential direction.

As illustrated in Figure 2, each of the inner annular parts 411 has a length D1 in the tire radial direction longer than the length E1 in the tire circumferential direction, i.e., it has a longitudinal shape in the side view of the non-pneumatic tire 1 as illustrated in Figure 2.

Here, the length D1 in the tire radial direction of the inner annular part 411 refers to the largest length in the tire radial direction of the outer edge shape of the inner annular part 411 among the length in the tire radial direction at each position in the tire circumferential direction (in the example illustrated in Figure 2, it corresponds to the length of the arrow D1).

In addition, the length E1 in the tire circumferential direction of the inner annular part 411 refers to the largest length in the tire circumferential direction of the outer edge shape of the inner annular part 411 among the length in the tire circumferential direction at each position in the tire radial direction (in the example illustrated in Figure 2, it corresponds to the length of the arrow E1).

Similarly, as illustrated in Figure 2, the inner hole 411h that is defined by each of the inner annular part 411 has a length F1 in the tire radial direction longer than the length G1 in the tire circumferential direction, i.e., it has a longitudinal shape in the side view of the non-pneumatic tire 1.

Here, the length F1 in the tire radial direction of the inner hole 411h refers to the largest length in the tire radial direction of the inner hole 411h among the length in the tire radial direction at each position in the tire circumferential direction.

In addition, the length G1 in the tire circumferential direction of the inner hole 411h refers to the largest length in the tire circumferential direction of the inner hole 411h among the length in the tire circumferential direction at each position in the tire radial direction.

As illustrated in Figure 2, each middle annular part 412 has a length E2 in the tire circumferential direction longer than the length D2 in the tire radial direction, i.e., it has a transverse shape in the side view of the non-pneumatic tire 1.

Here, the length E2 in the tire circumferential direction of the middle annular part 412 refers to the largest length in the tire circumferential direction of the outer edge shape of the middle annular part 412 among the length in the tire circumferential direction at each position in the tire radial direction (in the example illustrated in Figure 2, it corresponds to the length of the arrow E2).

In addition, the length D2 in the tire radial direction of the middle annular part 412 refers to the largest length in the tire radial direction of the outer edge shape of the middle annular part 412 among the length in the tire radial direction at each position in the tire circumferential direction (in the example illustrated in Figure 2, it corresponds to the length of the arrow D2).

Similarly, as illustrated in Figure 2, the middle hole 411h that is defined by each of the middle annular parts 412 has a length G2 in the tire circumferential direction longer than the length F2 in the tire radial direction, i.e., it has a transverse shape in the side view of the non-pneumatic tire 1.

Here, the length G2 in the tire circumferential direction of the middle hole 412h refers to the largest length in the tire circumferential direction of the middle hole 412h among the length in the tire circumferential direction at each position in the tire radial direction.

In addition, the length F2 in the tire radial direction of the middle hole 412h refers to the largest length in the tire radial direction of the middle hole 411h among the length in the tire radial direction at each position in the tire circumferential direction.

As illustrated in Figure 2, an inner additional hole 44h is defined by the inner cylinder 2, the pair of inner annular parts 411 adjacent to each other in the tire circumferential direction, and the bridge 42 connecting the pair of inner annular parts 411 to each other. The inner additional hole 44h penetrates the connecting body 4 in the tire width direction.

Also, a middle additional hole 45h is defined by the pair of inner annular parts 411 adjacent to each other in the tire circumferential direction, the bridge 42 connecting the pair of inner annular parts 411 to each other, and the pair of middle annular parts 412 connected to the end portion on the tire outer circumferential side of each of the pair of inner annular parts 411. The middle additional hole 45h penetrates the connecting body 4 in the tire width direction.

In addition, an outer additional hole 46h is defined by the pair of middle annular parts 412 adjacent to each other in the tire circumferential direction, the pair of outer connecting body part 413 connected to the end portion on the tire outer circumferential side of each of the pair of middle annular parts 412, and the outer cylinder 3. The outer additional hole 46h penetrates the connecting body 4 in the tire width direction.

As explained above, in this embodiment, the connecting body 4 has: the plurality of unit-connecting-body portions 41 arranged along the tire circumferential direction, and the plurality of bridges 42 that connect the plurality of unit-connecting-body portions 41 to each other. Each of the unit-connecting-body portions 41 has: the inner annular part 411 having the pair of inner branches 411b that are connected to each other on the inner cylinder 2 and gradually move away from each other in the tire circumferential direction as moving outward in the tire radial direction, then gradually approach each other and are connected to each other, a middle annular part 412 having the pair of middle branches 412b that are connected to each other at the end portion on the tire outer circumferential side of the inner annular part 411 and gradually move away from each other in the tire circumferential direction as moving outward in the tire radial direction, then gradually approach each other and are connected to each other, an outer connecting body part 413 having the pair of outer branches 413b that are connected to each other at the end portion on the tire outer circumferential side of the middle annular part 412 and gradually move away from each other in the tire circumferential direction as moving outward in the tire radial direction, and then are connected to the outer cylinder 3. Each of the bridges 42 connects the tire circumferential end portions 411t of the inner annular parts 411 adjacent to each other in the tire circumferential direction. The tire circumferential end portions 412t of the middle annular parts 412 adjacent to each other in the tire circumferential direction are connected to each other. Each of the inner annular parts 411 has the length D1 in the tire radial direction longer than the length E1 in the tire circumferential direction, and each of the middle annular parts 412 has the length E2 in the tire circumferential direction longer than the length D2 in the tire radial direction. The outer annular part 43 is composed of the outer connecting body part 413, and the outer cylinder connecting part 3a that is a part of the outer cylinder 3, connecting the pair of outer branches 413b of the outer connecting body part 413 to each other.

A vertically elongated inner annular part 411 is less likely to be compressed in the tire radial direction than the horizontally elongated middle annular part 412. In addition, the outer annular part 43 is substantially triangular in shape with its base on the tire outer circumferential side, therefore, it is easy to follow the shape of the ground surface and can easily support loads in the tire radial direction. Therefore, the middle annular part 412 is configured to be more easily compressed in the tire radial direction than the inner annular part 411 and the outer annular part 43. The inner annular part 411, the middle annular part 412, and the outer annular part 43 are connected to each other at their respective apexes, either directly or via other parts (such as the bridge 42), so that deformation beyond a certain degree is prevented.

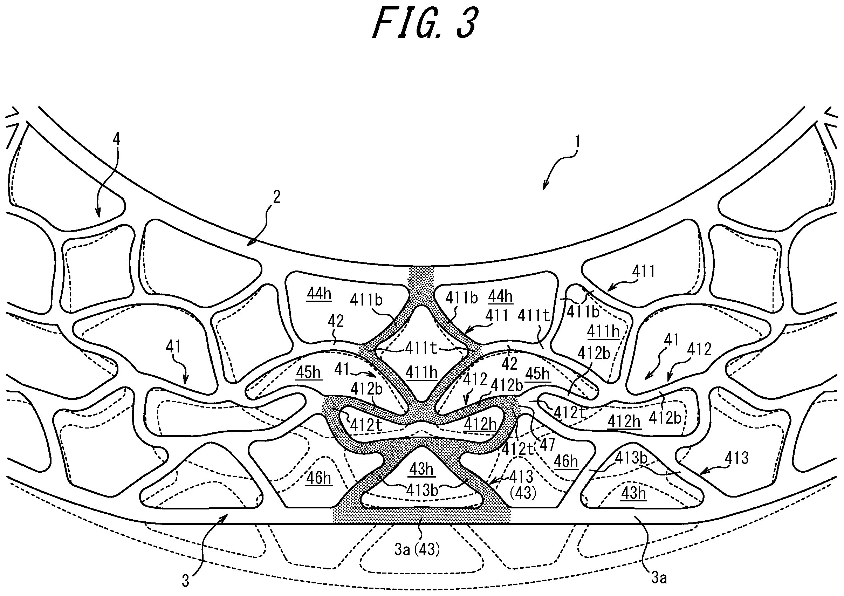

Figure 3 illustrates the state of the non-pneumatic tire 1 of this embodiment when a load is applied (and thus when the tire comes into contact with the ground). In Figure 3, the state when a load is applied (and thus when the tire is in contact with the ground) is illustrated by a solid line, and the state when no load is applied (and thus, when the tire is not in contact with the ground) as in Figure 2 is illustrated by a dashed line. As illustrated by the solid line in Figure 3, in the non-pneumatic tire 1 of this embodiment, when a load is applied, the connecting body 4 is compressed and deformed on the inner side in the tire radial direction of the ground contact surface, allowing the outer cylinder 3 to deform to follow the shape of the ground contact surface. During this state, the inner annular part 411 and the outer annular part 43 are not significantly compressed and deformed in the tire radial direction, but the middle annular part 412 is crushed in the tire radial direction. In other words, the middle annular part 412 is compressed and deformed in the tire radial direction to a greater extent than each of the inner annular part 411 and the outer annular part 43. As a result, the impact and vibration transmitted from the road surface is effectively absorbed at the middle annular part 412, and is prevented to be transmitted to the vehicle body. This improves the ride comfort performance.

The horizontally elongated middle annular part 412 allows deformation in the tire radial direction, while the vertically elongated inner annular part 411 allows shear deformation in the tire circumferential direction. The vertically elongated inner annular part 411 allows for shear deformation in the tire circumferential direction, so the horizontally elongated middle annular part 412 connected to the inner annular part 411 is more easily deformed. This allows the impact and vibration transmitted from the road surface to be absorbed more effectively at the middle annular part 412.

In addition, because of the bridge section 42, an additional middle hole 45h is partitioned on the tire outer circumferential side thereof, and the additional middle hole 45h acts like a cushion. This prevents a connecting portion 47 between the tire circumferential end portions 412t of the pair of middle annular parts 412, which locates on the tire outer circumferential side of the middle additional hole 45h, from deforming and swelling excessively upward (towards the tire inner circumferential side). This can further improve the ride comfort performance.

In addition, according to this embodiment, as illustrated in Figure 3, when a load is applied, the connecting body 4 can be compressed and deformed over the plurality of unit-connecting-body portions 41 (and, in turn, the middle annular part 412 can be compressed and deformed in the tire radial direction to a greater extent than each of the inner annular part 411 and the outer annular part 43 in the plurality of unit-connecting-body portions 41). This allows for compressive deformation over a wide area and the stress is dispersed in this way, therefore, it is possible to prevent stress from concentrating in one place. This improves durability.

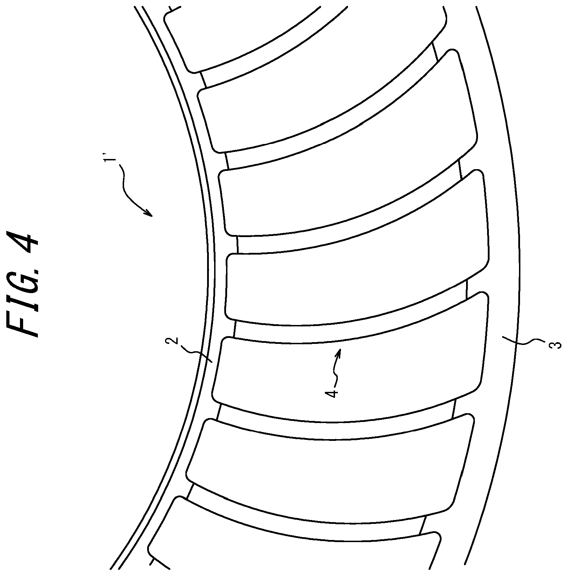

In addition, according to this embodiment, the connecting body 4 forms a reticular shape, thus, the length of each columnar part is shorter than the case, for example, as in the Comparative Example 1 illustrated in Figure 4, where the connecting body 4 is made up of a plurality of columnar parts connecting the inner cylinder 2 and the outer cylinder 3 to each other, which extend along curved lines and are arranged at intervals from each other in the tire circumferential direction. As a result, the width of each columnar part can be made thinner while maintaining the same rigidity and stress under load, and this in turn makes it possible to reduce the weight.

In the following, when describing the shapes formed by the inner annular part 411, the middle annular part 412, and the outer annular part 43 in a side view of the non-inflated tire 1, each shape refers to the shape formed by the center lines of the thickness of parts (i.e., the inner branch 411b in the case of the inner annular part 411, the middle branch 412b in the case of the middle annular part 412, and the outer branch 413b and the outer cylinder connecting part 3a in the case of the outer annular part 43) of the inner annular part 411, the middle annular part 412, and the outer annular part 43 in a side view of the non-pneumatic tire 1.

As illustrated in Figure 2, in a side view of the non-pneumatic tire 1, it is preferable that each of the inner annular parts 411 is substantially rhombic in shape. In this case, it is preferable that the longer of the two diagonals of the substantially rhombic shape formed by each of the inner annular parts 411 is parallel to the tire radial direction.

As a result, the inner annular part 411 can more effectively compress the middle annular part 412 in the tire radial direction without compressing itself too much in the tire radial direction when a load is applied, and in turn, the ride comfort performance can be further improved.

However, as long as the length D1 in the tire radial direction of each o the inner annular parts 411 is longer than the length E1 in the tire circumferential direction thereof, as described above, the inner annular part 411 may have any shape in a side view of the non-pneumatic tire 1.

From the same perspective, as illustrated in Figure 2, in a side view of the non-pneumatic tire 1, it is preferable that the inner hole 411h, which is defined by each of the inner annular parts 411, is substantially in rhombic in shape. In this case, it is preferable that the longer of the two diagonals of the substantially rhombic shape formed by each of the inner holes 411h is parallel to the tire radial direction.

However, as long as the length F1 in the tire radial direction of each of the inner halls 411h is longer than the length G1 in the tire circumferential direction thereof, as described above, the inner hall 411h may have any shape in a side view of the non-pneumatic tire 1.

As illustrated in Figure 2, in a side view of the non-pneumatic tire 1, it is preferable that each of the middle annular parts 412 is substantially trapezoidal in shape. In this case, it is preferable that the height direction of the trapezoid formed by each of the middle annular parts 412 is parallel to the tire radial direction. In addition, in this case, it is preferable that the longer of the two base sides of the trapezoid formed by each of the middle annular parts 412 is positioned more inward in the tire radial direction than the shorter base side.

As a result, the middle annular part 412 can be more effectively compressed in the tire radial direction by the inner annular part 411 and the outer connecting body part 413 when a load is applied, and this in turn further improves the ride comfort performance.

From the same perspective, in a side view of the non-pneumatic tire 1, it is also preferable that each of the middle annular parts 412 is substantially oval in shape. In this case, it is preferable that the short axis of the substantially oval shape formed by each of the middle annular parts 412 is parallel to the tire radial direction.

From the same perspective, in a side view of the non-pneumatic tire 1, it is preferable that each of the middle annular parts 412 is substantially rhombic in shape.

However, as long as the length E2 in the tire circumferential direction is longer than the length D2 in the tire radial direction, as described above, each of the middle annular parts 412 may have any shape in a side view of the non-pneumatic tire 1.

From the same perspective, as illustrated in Figure 2, it is preferable that the middle hole 412h, which is defined by each of the middle annular parts 412, is substantially trapezoidal in shape in a side view of the non-pneumatic tire 1. In this case, it is preferable that the height direction of the trapezoid formed by each of the intermediate holes 412h is parallel to the tire radial direction. In addition, in this case, it is preferable that the longer of the two base sides of the trapezoid formed by each of the middle holes 412h is positioned more inward in the tire radial direction than the shorter base side.

In addition, in a side view of the non-pneumatic tire 1, it is also preferable that each middle hole 412h is substantially oval in shape. In this case, it is preferable that the short axis of the substantially oval shape formed by each of the middle holes 412h is parallel to the tire radial direction.

However, as long as the length G2 in the tire circumferential direction is longer than the length F2 in the tire radial direction, as described above, each of the middle holes 412 may have any shape in a side view of the non-pneumatic tire 1.

As illustrated in Figure 2, in each of the unit-connecting-body portions 41 the length D1 in the tire radial direction of the inner annular part 411 is longer than the length D2 in the tire radial direction of the middle annular part 412. In addition, in each of the unit-connecting-body portions 41 the length E2 in the tire circumferential direction of the middle annular part 412 is longer than the length E1 in the tire circumferential direction of the inner annular part 411.

As a result, the middle annular part 412 can be more effectively compressed in the tire radial direction by the inner annular part 411 and the outer connecting body part 413 when a load is applied, and this in turn further improves the ride comfort performance.

Similarly, as illustrated in Figure 2, it is preferable in each of the unit-connecting-body portions 41 that the length F1 in the tire radial direction of the inner hole 411h, which is defined by the inner annular part 411, is longer than the length F2 in the tire radial direction of the middle hole 412h, which is defined by the middle annular part 412. In addition, it is preferable in each of the unit-connecting-body portions 41 that the length G2 in the tire circumferential direction of the middle hole 412h, which is defined by the middle annular part 412, is longer than the length G1 in the tire circumferential direction of the inner hole 411h, which is defined by the inner annular part 411.

As illustrated in Figure 2, in a side view of the non-pneumatic tire 1, it is preferable that each of the outer annular parts 43 is substantially triangular in shape with a base that is roughly parallel to the tire circumferential direction on the tire outer circumferential side. In this case, the base of the substantially triangular shape formed by each of the outer annular parts 43 is composed of the center line of the thickness of the outer cylinder connecting part 3a of the outer cylinder 3. In this case, it is preferable that the height direction of the substantially triangular shape formed by each of the outer annular parts 43 is parallel to the tire radial direction. In addition, in this case, it is preferable that the substantially triangular shape formed by each of the outer annular parts 43 is substantially an isosceles triangle.

As a result, the outer annular part 43 can more effectively compress the middle annular part 412 in the tire radial direction without compressing itself too much in the tire radial direction when a load is applied, and in turn, the ride comfort performance can be further improved.

Similarly, as illustrated in Figure 2, in a side view of the non-pneumatic tire 1, it is preferable that the outer hole 43h, which is defined by each of the outer annular parts 43, is substantially triangular in shape with a base that is roughly parallel to the tire circumferential direction on the tire outer circumferential side. In this case, it is preferable that the height direction of the substantially triangular shape formed by each of the outer holes 43h is parallel to the tire radial direction. In addition, in this case, it is preferable that the substantially triangular shape formed by each of the outer holes 43h is substantially an isosceles triangle.

As illustrated in Figure 2, it is preferable that each of the unit-connecting-body portions 41 has the same shape as each other. In addition, it is preferable that each of the unit-connecting-body portions 41 is linearly symmetric with respect to the tire radial direction at the center position in the tire circumferential direction, respectively.

### EXAMPLES

Models of the non-pneumatic tire 1 according to Example 1 and Comparative Example 1 were created and evaluated by analysis, which will be described below.

The model of the non-pneumatic tire 1 in accordance with Example 1 had the configuration illustrated in Figure 2.

The model of the non-pneumatic tire 1 in accordance with Comparative Example 1 was different from the model in Example 1 only in shape, as illustrated in Figure 4. To be more specific, in the model in Comparative Example 1, the connecting body 4 was made up of a plurality of columnar parts connecting the inner cylinder 2 and the outer cylinder 3 to each other, which extend along curved lines and are arranged at intervals from each other in the tire circumferential direction.

The models in Example 1 and Comparative Example 1 had the same tire size (PCR 155/70R13) and the same material properties.

The results of the analysis of stress, vertical spring, and weight for Example 1 and Comparative Example 1 are provided in Table 1 below. It should be noted that the values provided in Table 1 all represent indexes when the value of the analysis result of Comparative Example 1 is set to 100. The values for stress, vertical spring, and weight provided in Table 1 all indicate that the higher the value, the higher the stress, vertical spring, and weight. In addition, the stress in Table 1 represents the index value of the maximum stress generated in each model when a load is applied to each model.

**[Table 1]**

| | Stress (-) | Vertical spring (-) | Weight (-) |
|---|---|---|---|
| Comparative Example 1 | 100 | 100 | 100 |
| Example 1 | 96 | 65 | 86 |

As can be seen from the results provided in Table 1, in comparison with Comparative Example 1, Example 1 had a lower vertical spring while having an equivalent level of stress as Comparative Example 1. This means that Example 1 can be made more flexible than Comparative Example 1 and improve the ride comfort performance while maintaining an equivalent level of stress and durability as Comparative Example 1. In addition, Example 1 was lighter while having an equivalent level of stress as Comparison Example 1. This means that Example 1 can be made lighter than Comparative Example 1 while maintaining an equivalent level of stress and durability as Comparative Example 1.

### INDUSTRIAL APPLICABILITY

The non-pneumatic tire in accordance with this disclosure can be used on any moving object (e.g., small mobilities, light vehicles, passenger vehicles, various other vehicles, motorcycles, wheelchairs, etc.), and is particularly suitable for use on the small mobilities or the light vehicles.

### REFERENCE SIGNS LIST

- 1: Non-pneumatic tire
- 2: Inner cylinder
- 3: Outer cylinder
- 3a: Outer cylinder connecting part
- 4: Connecting body
- 41: Unit-connecting-body portion
- 411: Inner annular part
- 411b: Inner branch
- 411t: Tire circumferential direction end portion
- 411h: Inner hole
- 412: Middle annular part
- 412b: Middle branch
- 412t: Tire circumferential direction end portion
- 412h: Middle hole
- 413: Outer connecting body part
- 413b: Outer branch
- 42: Bridge
- 43: Outer annular part
- 43h: Outer hole
- 44h: Inner additional hole
- 45h: Middle additional hole
- 46h: Outer additional hole
- W: Wheel
- T: Tread member
- O: Tire center axis
- 1': Non-pneumatic tire in accordance with Comparative Example

## Claims

1. A non-pneumatic tire (1) comprising:
an inner cylinder (2),
an outer cylinder (3) disposed on a tire outer circumferential side of the inner cylinder (2), and
a connecting body (4) that connects the inner cylinder (2) and the outer cylinder (3), wherein
the connecting body (4) has:
a plurality of unit-connecting-body portions (41) arranged along a tire circumferential direction, and
a plurality of bridges (42) that connect the plurality of unit-connecting-body portions (41) to each other,
each of the unit-connecting-body portions (41) has:
an inner annular part (411) having a pair of inner branches (411b) that are connected to each other on the inner cylinder (2) and gradually move away from each other in the tire circumferential direction as moving outward in a tire radial direction, then gradually approach each other and are connected to each other,
a middle annular part (412) having a pair of middle branches (412b) that are connected to each other at an end portion on the tire outer circumferential side of the inner annular part (411) and gradually move away from each other in the tire circumferential direction as moving outward in the tire radial direction, then gradually approach each other and are connected to each other, and
an outer connecting body part (413) having a pair of outer branches (413b) that are connected to each other at an end portion on the tire outer circumferential side of the middle annular part (412) and gradually move away from each other in the tire circumferential direction as moving outward in the tire radial direction, and then are connected to the outer cylinder (3),
each of the bridges (42) connects tire circumferential end portions (412t) of the inner annular parts (411) adjacent to each other in the tire circumferential direction,
tire circumferential end portions (412t) of the middle annular parts (412) adjacent to each other in the tire circumferential direction are connected to each other,
each of the inner annular parts (411) has a length (D1) in the tire radial direction longer than a length (E1) in the tire circumferential direction, and
each of the middle annular parts (412) has a length (E2) in the tire circumferential direction longer than a length (D2) in the tire radial direction,
**characterised in that**,
in each of the unit-connecting-body portions (41), the length (D1) in the tire radial direction of the inner annular part (411) is longer than the length (D2) in the tire radial direction of the middle annular part (412),
in each of the unit-connecting-body portions (41), the length (E2) in the tire circumferential direction of the middle annular part (412) is longer than the length (E1) in the tire circumferential direction of the inner annular part (411).

2. The non-pneumatic tire (1) as described in claim 1, wherein an outer annular part (43) is composed of the outer connecting body part (413) and an outer cylinder connecting part (3a), the outer cylinder connecting part (3a) being a part of the outer cylinder (3) connecting the pair of outer branches (413b) of the outer connecting body part (413) to each other, and
when a load is applied to the non-pneumatic tire (1), the middle annular part (412) undergoes greater compressive deformation in the tire radial direction than each of the inner annular part (411) and the outer annular part (43).

3. The non-pneumatic tire (1) as described in claim 1, wherein each of the inner annular parts (411) is substantially rhombic in shape.

4. The non-pneumatic tire (1) as described in claim 1, wherein each of the middle annular parts (412) is substantially trapezoidal, oval, or rhombic in shape.

5. The non-pneumatic tire (1) as described in claim 1, wherein an outer annular part (43) is composed of the outer connecting body part (413) and an outer cylinder connecting part (3a), the outer cylinder connecting part (3a) being a part of the outer cylinder (3) connecting the pair of outer branches (413b) of the outer connecting body part (413) to each other, and
the outer annular part (43) is substantially triangular in shape with its base on the tire outer circumferential side.

6. The non-pneumatic tire (1) as described in any one of claims 1 to 5, wherein the connecting body (4) and the outer cylinder (3) are configured to be elastically deformable.

7. The non-pneumatic tire (1) as described in any preceding claim, wherein an inner additional hole (44h) is defined by the inner cylinder (2), the pair of inner annular parts (411) adjacent to each other in the tire circumferential direction, and the bridge (42) connecting the pair of inner annular parts (411) to each other.

8. The non-pneumatic tire (1) as described in any preceding claim, wherein a middle additional hole (45h) is defined by the pair of inner annular parts (411) adjacent to each other in the tire circumferential direction, the bridge (42) connecting the pair of inner annular parts (411) to each other, and the pair of middle annular parts (412) connected to the end portion on the tire outer circumferential side of each of the pair of inner annular parts (411).

9. The non-pneumatic tire (1) as described in any preceding claim, wherein an outer additional hole (46h) is defined by the pair of middle annular parts (412) adjacent to each other in the tire circumferential direction, the pair of outer connecting body part (413) connected to the end portion on the tire outer circumferential side of each of the pair of middle annular parts (412), and the outer cylinder (3).

## Patentansprüche

1. Luftloser Reifen (1), umfassend:
einen inneren Zylinder (2),
einen äußeren Zylinder (3), der auf einer äußeren Umfangsseite des inneren Zylinders (2) des Reifens angeordnet ist, und
einen Verbindungskörper (4), der den inneren Zylinder (2) und den äußeren Zylinder (3) verbindet, wobei
der Verbindungskörper (4) Folgendes aufweist:
eine Vielzahl von Einheitsverbindungskörperabschnitten (41), die entlang einer Umfangsrichtung des Reifens angeordnet sind, und
eine Vielzahl von Brücken (42), die die Vielzahl von Einheitsverbindungskörperabschnitten (41) miteinander verbinden,
wobei jeder der Einheitsverbindungskörperabschnitte (41) Folgendes aufweist:
einen innerer ringförmiger Teil (411), der ein Paar von inneren Schenkeln (411b) aufweist, die am inneren Zylinder (2) miteinander verbunden sind und sich in der Umfangsrichtung des Reifens schrittweise voneinander bewegen, während sie sich in einer radialen Richtung des Reifens nach außen bewegen, sich dann schrittweise einander annähern und miteinander verbunden werden,
einen mittleren ringförmigen Teil (412), der ein Paar von mittleren Schenkel (412b) aufweist, die an einem Endabschnitt auf der äußeren Umfangsseite des Reifens des inneren ringförmigen Teils (411) verbunden sind und sich in der Umfangsrichtung des Reifens schrittweise voneinander bewegen, während sie sich in der radialen Richtung des Reifens nach außen bewegen, sich dann schrittweise einander annähern und miteinander verbunden werden, und
einen äußeren Verbindungskörperteil (413), der ein Paar von äußeren Schenkeln (413b) aufweist, die an einem Endabschnitt auf der äußeren Umfangsseite des mittleren ringförmigen Teils (412) des Reifens miteinander verbunden sind und sich in der Umfangsrichtung des Reifens schrittweise voneinander bewegen, während sie sich in der radialen Richtung des Reifens nach außen bewegen und dann mit dem äußeren Zylinder (3) verbunden werden,
wobei jede der Brücken (42) aneinander angrenzende Umfangsendabschnitte (412t) der inneren ringförmigen Teile (411) in der Umfangsrichtung des Reifens verbindet,
wobei die Umfangsendabschnitte (412t) der in der Umfangsrichtung des Reifens aneinander angrenzenden mittleren ringförmigen Teile (412) miteinander verbunden sind,
wobei jeder der inneren ringförmigen Teile (411) eine Länge (D1) in der radialen Richtung des Reifens aufweist, die länger ist als eine Länge (E1) in der Umfangsrichtung des Reifens, und
wobei jeder der mittleren ringförmigen Teile (412) eine Länge (E2) in der Umfangsrichtung des Reifens aufweist, die länger ist als eine Länge (D2) in der radialen Richtung des Reifens,
**dadurch gekennzeichnet, dass**
in jedem der Einheitsverbindungskörperabschnitte (41) die Länge (D1) in der radialen Richtung des Reifens des inneren ringförmigen Teils (411) größer ist als die Länge (D2) in der radialen Richtung des Reifens des mittleren ringförmigen Teils (412),
in jedem der Einheitsverbindungskörperabschnitte (41) die Länge (E2) in der Umfangsrichtung des Reifens des mittleren ringförmigen Teils (412) größer ist als die Länge (E1) in der Umfangsrichtung des Reifens des inneren ringförmigen Teils (411).

2. Luftloser Reifen (1) nach Anspruch 1, wobei ein äußerer ringförmiger Teil (43) aus dem äußeren Verbindungskörperteil (413) und einem äußeren Zylinderverbindungsteil (3a) besteht, wobei der äußere Zylinderverbindungsteil (3a) ein Teil des äußeren Zylinders (3) ist, der das Paar von äußeren Schenkeln (413b) des äußeren Verbindungskörperteils (413) miteinander verbindet, und
wenn eine Last auf den luftlosen Reifen (1) angewendet wird, der mittlere ringförmige Teil (412) eine größere Druckverformung in der radialen Richtung des Reifens erfährt als jeder des inneren ringförmigen Teils (411) und des äußeren ringförmigen Teils (43).

3. Luftloser Reifen (1) nach Anspruch 1, wobei jeder der inneren ringförmigen Teile (411) im Wesentlichen in der Form rautenförmig ist.

4. Luftloser Reifen (1) nach Anspruch 1, wobei jeder der mittleren ringförmigen Teile (412) im Wesentlichen in der Form trapezförmig, oval oder rautenförmig ist.

5. Luftloser Reifen (1) nach Anspruch 1, wobei ein äußerer ringförmiger Teil (43) aus dem äußeren Verbindungskörperteil (413) und einem äußeren Zylinderverbindungsteil (3a) besteht, wobei der äußere Zylinderverbindungsteil (3a) ein Teil des äußeren Zylinders (3) ist, der das Paar von äußeren Schenkeln (413b) des äußeren Verbindungskörperteils (413) miteinander verbindet, und
der äußere ringförmige Teil (43) im Wesentlichen in der Form dreieckig ist und seine Basis an der äußeren Umfangsseite des Reifens liegt.

6. Luftloser Reifen (1) nach einem der Ansprüche 1 bis 5, wobei der Verbindungskörper (4) und der äußere Zylinder (3) so konfiguriert sind, dass sie elastisch verformbar sind.

7. Luftloser Reifen (1) nach einem vorstehenden Anspruch, wobei eine zusätzliche innere Öffnung (44h) durch den inneren Zylinder (2), das Paar von in der Umfangsrichtung des Reifens aneinander angrenzenden inneren ringförmigen Teilen (411) und die Brücke (42), die das Paar von inneren ringförmigen Teilen (411) miteinander verbindet, definiert ist.

8. Luftloser Reifen (1) nach einem vorstehenden Anspruch, wobei eine zusätzliche mittlere Öffnung (45h) durch das Paar von in der Umfangsrichtung des Reifens aneinander angrenzenden inneren ringförmigen Teilen (411), die Brücke (42), die die beiden inneren ringförmigen Teile (411) miteinander verbindet, und das Paar von mittleren ringförmigen Teilen (412), die mit dem Endabschnitt auf der äußeren Umfangsseite des Reifens von jedem des Paares von inneren ringförmigen Teilen (411) verbunden sind, definiert ist.

9. Luftloser Reifen (1) nach einem vorstehenden Anspruch, wobei eine zusätzliche äußere Öffnung (49h) durch das Paar von in der Umfangsrichtung des Reifens aneinander angrenzenden inneren ringförmigen Teilen (412), das Paar von äußeren Verbindungskörperteilen (413), die mit dem Endabschnitt auf der äußeren Umfangsseite des Reifens von jedem des Paares von mittleren ringförmigen Teilen (412) verbunden sind, und den äußeren Zylinder (3) definiert ist.

## Revendications

1. Pneu non pneumatique (1) comprenant :
un cylindre interne (2),
un cylindre externe (3) disposé sur un côté circonférentiel externe de pneu du cylindre interne (2), et
un corps de liaison (4) qui relie le cylindre interne (2) et le cylindre externe (3), dans lequel le corps de liaison (4) présente :
une pluralité de parties de corps de liaison d'unité (41) agencées le long d'une direction circonférentielle du pneu, et
une pluralité de ponts (42) qui relient la pluralité de parties de corps de liaison d'unité (41) les unes aux autres,
chacune des parties de corps de liaison d'unité (41) présente :
une partie annulaire interne (411) présentant une paire de branches internes (411b) qui sont reliées l'une à l'autre sur le cylindre interne (2) et s'éloignent progressivement l'une de l'autre dans la direction circonférentielle du pneu tout en se déplaçant vers l'extérieur dans la direction radiale du pneu, puis se rapprochent progressivement l'une de l'autre et sont reliées l'une à l'autre,
une partie annulaire centrale (412) présentant une paire de branches centrales (412b) qui sont reliées l'une à l'autre à une partie d'extrémité du côté circonférentiel externe du pneu de la partie annulaire interne (411) et qui s'éloignent progressivement l'une de l'autre dans le sens circonférentiel du pneu tout en se déplaçant vers l'extérieur dans la direction radiale du pneu, puis se rapprochent progressivement l'une de l'autre et sont reliées l'une à l'autre, et
une partie de corps de liaison externe (413) présentant une paire de branches externes (413b) qui sont reliées l'une à l'autre à une extrémité du côté circonférentiel externe du pneu de la partie annulaire centrale (412) et s'éloignent progressivement l'une de l'autre dans la direction circonférentielle du pneu tout en se déplaçant vers l'extérieur dans la direction radiale du pneu, puis sont reliées au cylindre externe (3),
chacun des ponts (42) relie des parties d'extrémité circonférentielles du pneu (412t) des parties annulaires internes (411) adjacentes les unes aux autres dans la direction circonférentielle du pneu,
des parties d'extrémité circonférentielles du pneu (412t) des parties annulaires centrales (412) adjacentes les unes aux autres dans la direction circonférentielle du pneu sont reliées les unes aux autres,
chacune des parties annulaires internes (411) présente une longueur (D1) dans la direction radiale du pneu plus longue qu'une longueur (E1) dans la direction circonférentielle du pneu, et
chacune des parties annulaires centrales (412) présente une longueur (E2) dans la direction circonférentielle du pneu plus longue qu'une longueur (D2) dans la direction radiale du pneu,
**caractérisé en ce que**
dans chacune des parties de corps de liaison d'unité (41), la longueur (D1) dans la direction radiale du pneu de la partie annulaire interne (411) est plus longue que la longueur (D2) dans la direction radiale du pneu de la partie annulaire centrale (412),
dans chacune des parties de corps de liaison d'unité (41), la longueur (E2) dans la direction circonférentielle du pneu de la partie annulaire centrale (412) est plus longue que la longueur (E1) dans la direction circonférentielle du pneu de la partie annulaire interne (411).

2. Pneu non pneumatique (1) tel que décrit dans la revendication 1, dans lequel une partie annulaire externe (43) est composée de la partie de corps de liaison externe (413) et d'une partie de liaison cylindrique externe (3a), la partie de liaison cylindrique externe (3a) étant une partie du cylindre externe (3) reliant la paire de branches externes (413b) de la partie de corps de liaison externe (413) l'une à l'autre, et
lorsqu'une charge est appliquée au pneu non pneumatique (1), la partie annulaire centrale (412) subit une déformation de compression plus importante dans la direction radiale du pneu que dans chacune de la partie annulaire interne (411) et de la partie annulaire externe (43).

3. Pneu non pneumatique (1) tel que décrit dans la revendication 1, dans lequel chacune des parties annulaires internes (411) est sensiblement de forme rhombique.

4. Pneu non pneumatique (1) tel que décrit dans la revendication 1, dans lequel chacune des parties annulaires centrales (412) est sensiblement de forme trapézoïdale, ovale ou rhombique.

5. Pneu non pneumatique (1) tel que décrit dans la revendication 1, dans lequel une partie annulaire externe (43) est composée de la partie de corps de liaison externe (413) et d'une partie de liaison de cylindre externe (3a), la partie de liaison de cylindre externe (3a) étant une partie du cylindre externe (3) reliant la paire de branches externes (413b) de la partie de corps de liaison externe (413) l'une à l'autre, et
la partie annulaire externe (43) est sensiblement de forme triangulaire avec sa base sur le côté circonférentiel externe du pneu.

6. Pneu non pneumatique (1) tel que décrit dans l'une quelconque des revendications 1 à 5, dans lequel le corps de liaison (4) et le cylindre externe (3) sont configurés pour pouvoir être déformés élastiquement.

7. Pneu non pneumatique (1) tel que décrit dans une quelconque revendication précédente, dans lequel un trou supplémentaire interne (44h) est délimité par le cylindre interne (2), la paire de parties annulaires internes (411) adjacentes l'une à l'autre dans la direction circonférentielle du pneu, et le pont (42) reliant la paire de parties annulaires internes (411) l'une à l'autre.

8. Pneu non pneumatique (1) tel que décrit dans toute revendication précédente, dans lequel un trou supplémentaire central (45h) est défini par la paire de parties annulaires internes (411) adjacentes l'une à l'autre dans la direction circonférentielle du pneu, le pont (42) reliant la paire de parties annulaires internes (411) l'une à l'autre, et la paire de parties annulaires centrales (412) reliées à la partie terminale du côté circonférentiel externe du pneu de chacune de la paire de parties annulaires internes (411).

9. Pneu non pneumatique (1) tel que décrit dans une quelconque revendication précédente, dans lequel un trou supplémentaire externe (46h) est délimité par la paire de parties annulaires centrales (412) adjacentes l'une à l'autre dans la direction circonférentielle du pneu, la paire de parties de corps de liaison externes (413) reliées à la partie d'extrémité du côté circonférentiel externe du pneu de chacun de la paire de parties annulaires centrales (412), et du cylindre externe (3).
